# DEMANDE DE BREVET EUROPEEN

(11) **EP 4 299 375 A1**
(43) Date de publication de la demande: **03.01.2024**
(21) Numéro de dépôt: 23182214.9
(22) Date de dépôt: 28.06.2023
(51) Int. Cl.: B60Q 1/00, H01R 4/2406, B62J 11/19, B62J 6/01

(54) **CONNECTEUR DE DÉRIVATION PERFECTIONNÉ DU TYPE À PERFORATION D'ISOLANT POUR CÂBLES ÉLECTRIQUES ISOLÉS ET SYSTÈME DÉPORTÉ**

(30) Priorité: 28.06.2022 FR 2206452
(71) Demandeur: Boully, Enzo, 71530 Crissey (FR)
(72) Inventeur: Boully, Enzo, 71530 Crissey (FR)
(74) Mandataire: Cabinet Chaillot

(57) **Abrégé**

L'invention concerne un connecteur (C) de dérivation du type à perforation d'isolant pour câbles électriques isolés, connecteur (C) comprenant un berceau (1) comportant un logement principal (4) et au moins un logement dérivé (5), et un couvercle (2) adapté sur le berceau (1) et supportant un organe de perforation conducteur s'étendant transversalement par rapport aux axes (X1, X2) des logements (4, 5) selon une direction de perforation (X0), caractérisé par le fait que le couvercle (2) est monté mobile en translation par rapport au berceau (1) selon la direction de perforation (X0) au moins entre une position intermédiaire, dans laquelle l'organe de perforation traverse le ou les logements dérivés (5), et une position basse, dans laquelle l'organe de perforation traverse le ou les logements dérivés (5) et le logement principal (4), le connecteur (C) comportant des moyens de maintien en position du couvercle (2) par rapport au berceau (1) dans la position intermédiaire prévus en partie sur le couvercle (2) et en partie sur le berceau (1).

## Description

Le domaine technique de l'invention est celui des connecteurs de dérivation pour câbles électriques permettant d'effectuer le raccordement électrique d'un câble principal et d'au moins un câble secondaire ou dérivé, les câbles ayant une âme conductrice entourée d'une gaine isolante.

La présente invention porte en particulier sur un connecteur de dérivation du type à perforation d'isolant pour câbles électriques isolés, notamment à âme conductrice multibrin, et sur un système déporté de reproduction synchrone de l'allumage d'au moins un feu d'un véhicule à deux-roues comprenant un tel connecteur.

Les connecteurs du type à perforation d'isolant sont couramment utilisés pour la connexion électrique de câbles électriques isolés, et comprennent des éléments métalliques de serrage pourvus de lames, de dents, de pointes ou de toute autre excroissance acérée qui, sous l'effet d'une pression exercée par exemple par un organe fileté, pénètrent puis traversent l'isolant électrique du câble principal sous tension et du ou des câbles dérivés sous tension afin de raccorder électriquement les âmes conductrices des câbles. Ainsi, de tels connecteurs ne nécessitent aucun dénudage des câbles à interconnecter, ni aucune isolation postérieure au montage.

Un tel connecteur est, par exemple, divulgué dans le brevet français FR2762449, qui décrit un connecteur comportant deux mâchoires et un couple vis/écrou pour rapprocher l'une de l'autre lesdites mâchoires. Chaque mâchoire comporte un corps en matière isolante rigide et un organe de contact conducteur présentant deux parties actives qui font chacune saillie à partir d'une face de réception du corps pour pénétrer dans l'âme conductrice d'un câble et dans l'âme conductrice de l'autre câble, chaque face de réception du corps de chaque mâchoire étant en regard de la face de réception du corps de l'autre mâchoire avec chaque partie active de l'organe de contact d'une mâchoire au droit d'une partie active de l'organe de contact de l'autre mâchoire. Ce connecteur admet une position de mise en place des câbles entre les faces de réception des mâchoires avec chaque partie active d'un organe de contact au droit d'un câble et une position de service dans laquelle les câbles sont pris en sandwich entre les mâchoires avec chaque partie active qui a pénétré dans une âme conductrice d'un câble respectif. Le connecteur est configuré pour passer de la position de mise en place des câbles à la position de service par rapprochement des mâchoires, avec le couple vis/ écrou, d'une course prédéterminée.

L'inconvénient majeur de tels connecteurs réside dans l'impossibilité, sans outillage spécial, de contrôler la pénétration des lames, des dents ou des pointes, et de ce fait de contrôler la qualité du contact électrique. De plus, dans le cas où un couple de serrage trop important est appliqué, il existe un risque de sectionner les câbles en serrant les mâchoires trop fort l'une contre l'autre.

On connaît également, notamment par le brevet japonais JP2002280088, un connecteur de dérivation du type à perforation d'isolant de structure plus simple et plus compacte. Ce connecteur comprend un premier corps en forme de U destiné à recevoir les câbles électriques à raccorder électriquement et un second corps portant un élément conducteur de type aiguille. Le second corps est apte à coiffer le premier corps et à être verrouillé par rapport à celui-ci dans une position de service dans laquelle l'élément conducteur de type aiguille perfore les câbles.

Cependant, un tel connecteur forme un ensemble aisément séparable. En effet, le premier corps et le second corps sont deux pièces distinctes et séparées lorsqu'elles ne sont pas verrouillées en position de service. De ce fait, l'une des pièces pourrait être perdue. En outre, la forme en U des corps ne permet pas d'obtenir une bonne étanchéité. Par ailleurs, l'unique position verrouillée ne permet pas de déconnecter de manière sûre et fiable le câble principal sans intervenir sur le ou les câbles dérivés ni de connecter de manière sûre et fiable le ou les câbles dérivés sans connecter le câble principal. Ainsi, un tel connecteur ne convient pas, par exemple, à une application pouvant nécessiter un certain nombre de cycles d'insertion et de retrait de l'élément conducteur de type aiguille vis-à-vis du câble principal.

Les brevets US 2 164 381 A et US 5 055 065 A décrivent d'autres exemples de connecteurs de l'état antérieur de la technique.

La présente invention a pour but de remédier à au moins certains de ces inconvénients en perfectionnant les connecteurs connus précités, et propose ainsi un connecteur sous la forme de pièces distinctes que l'on peut assembler avantageusement de manière fiable l'une à l'autre pour l'utilisation, compact, étanche et dont la mise en oeuvre est simple, rapide, plus sûre et plus fiable, et peut être accomplie par un utilisateur n'ayant pas forcément une qualification professionnelle particulière.

La présente invention concerne également un système déporté de reproduction synchrone de l'allumage d'au moins un feu d'un véhicule à deux-roues comprenant au moins un tel connecteur.

On connaît, par exemple du brevet européen EP2274182, un système déporté de reproduction synchrone de l'allumage d'au moins un feu d'une moto. Ce système comprend un dispositif d'éclairage auxiliaire apte à être monté sur une veste ou un article porté par le conducteur de la moto et connecté électriquement au câblage existant du dispositif d'éclairage principal de la moto par l'intermédiaire d'un boîtier de commande. Ce boîtier de commande comprend une plateforme de circuit électrique dans laquelle les câbles électriques reliés au dispositif d'éclairage auxiliaire et les câbles électriques de la moto sont connectés en série.

Cependant, un tel boîtier de commande est complexe et nécessite d'être installé par une personne qualifiée.

L'utilisation d'un ou plusieurs connecteurs selon la présente invention dans un tel système vise à simplifier la connexion du système avec le ou les câbles électriques du véhicule à deux-roues. En d'autres termes, un tel système offre une simplicité d'installation.

Il convient toutefois de souligner que le connecteur selon la présente invention pourrait être utilisé dans tout autre système nécessitant la communication d'informations de signal entre un câble principal et au moins un câble dérivé.

La solution selon la présente invention repose sur un connecteur de dérivation du type à perforation d'isolant ayant une structure simple composée de pièces distinctes assemblées avantageusement de manière fiable, comprenant une partie de réception des câbles et une partie de perforation et dans lequel la partie de perforation est apte à occuper au moins deux positions, avantageusement trois positions, dont une position dite intermédiaire, par rapport à la partie de réception de câbles et à être maintenue au moins dans la position intermédiaire, avantageusement dans chacune des différentes positions.

La présente invention a donc pour objet un connecteur de dérivation du type à perforation d'isolant pour câbles électriques isolés configuré pour raccorder électriquement un câble principal et au moins un câble dérivé, lesquels câbles ont une âme conductrice, notamment une âme conductrice multibrin, entourée d'une gaine isolante, connecteur comprenant un berceau en matériau isolant comportant un bloc chambre destiné à recevoir une partie de chaque câble à raccorder, le bloc chambre comportant un logement principal creux conformé pour la réception d'une partie du câble principal et au moins un logement dérivé creux conformé pour la réception d'une partie d'au moins un câble dérivé, chaque logement s'étendant suivant un axe respectif et ayant au moins une ouverture de passage de câble pour chaque câble à raccorder, et un couvercle en matériau isolant adapté sur le berceau, le couvercle portant un organe de perforation conducteur s'étendant transversalement par rapport aux axes des logements selon une direction de perforation, les logements étant décalés selon la direction de perforation de telle sorte que le logement principal se trouve en aval du ou des logements dérivés, le bloc chambre comportant en outre un passage d'organe de perforation configuré pour recevoir l'organe de perforation, le passage étant en communication avec les logements et s'étendant selon un axe perpendiculaire à l'axe de chaque logement, caractérisé par le fait que le couvercle est monté mobile en translation par rapport au berceau selon la direction de perforation au moins entre une position intermédiaire, dans laquelle l'organe de perforation s'est déplacé dans le passage, selon une première course de perçage, et traverse le ou les logements dérivés mais ne pénètre pas dans le logement principal, et une position basse, dans laquelle l'organe de perforation s'est déplacé dans le passage, selon une seconde course de perçage, et traverse le ou les logements dérivés et le logement principal, le connecteur comportant des moyens de maintien en position du couvercle par rapport au berceau dans la position intermédiaire prévus en partie sur le couvercle et en partie sur le berceau.

De préférence, lesdits moyens de maintien sont également des moyens de maintien en position du couvercle par rapport au berceau dans la position basse.

De préférence, le couvercle est monté mobile en translation par rapport au berceau selon la direction de perforation entre une position haute dans laquelle le couvercle vient en prise avec le berceau et l'organe de perforation ne pénètre dans aucun des logements, et lesdites positions intermédiaire et basse, lesdits moyens de maintien étant des moyens de maintien en position du couvercle par rapport au berceau dans chacune des positions haute, intermédiaire et basse.

Un tel connecteur peut être mis en oeuvre de manière aisée et rapide étant donné que l'utilisateur n'a qu'à positionner le câble principal dans le logement principal, et éventuellement le ou les câbles dérivés dans le ou les logements dérivés, et à appuyer sur le couvercle et le berceau pour permettre la translation du couvercle par rapport au berceau et donc le déplacement de l'organe de perforation dans la direction de perforation. De plus, ce connecteur peut être utilisé par n'importe quelle personne, l'utilisateur n'ayant pas besoin d'utiliser un outil spécifique ou de faire appel à des compétences spécifiques.

La possibilité de positionner le couvercle par rapport au berceau au moins dans la position intermédiaire et dans la position basse, avantageusement dans les trois positions définies ci-dessus, et la présence des moyens de maintien en position du couvercle par rapport au berceau dans au moins la position intermédiaire, avantageusement dans ces trois positions, permettent de proposer un connecteur fiable, sécurisé et prêt à l'emploi. En effet, l'utilisateur pourrait recevoir le connecteur avec le ou les câbles dérivés déjà installés dans le ou les logements dérivés et le couvercle en position intermédiaire donc avec le ou les câbles dérivés percés. En outre, le positionnement et le maintien au moins dans la position intermédiaire, avantageusement dans ces trois positions, permet à l'utilisateur de contrôler, sans outillage spécial, la pénétration de l'organe de perforation dans le ou les câbles dérivés puis dans le câble principal.

Par ailleurs, les moyens de maintien du couvercle en position haute permettent d'obtenir un connecteur sous la forme de pièces assemblées de manière fiable, le couvercle et le berceau pouvant rester assemblés même en cas de non utilisation du connecteur.

En d'autres termes, selon un mode de réalisation avantageux de la présente invention, le connecteur selon la présente invention est un connecteur de dérivation du type à perforation d'isolant pour câbles électriques isolés configuré pour raccorder électriquement un câble principal et au moins un câble dérivé, lesquels câbles ont une âme conductrice, notamment une âme conductrice multibrin, entourée d'une gaine isolante, connecteur comprenant un berceau en matériau isolant comportant un bloc chambre destiné à recevoir une partie de chaque câble à raccorder, le bloc chambre comportant un logement principal creux conformé pour la réception d'une partie du câble principal et au moins un logement dérivé creux conformé pour la réception d'une partie d'au moins un câble dérivé, chaque logement s'étendant suivant un axe respectif et ayant au moins une ouverture de passage de câble pour chaque câble à raccorder, et un couvercle en matériau isolant adapté sur le berceau, le couvercle portant un organe de perforation conducteur s'étendant transversalement par rapport aux axes des logements selon une direction de perforation, les logements étant décalés selon la direction de perforation de telle sorte que le logement principal se trouve en aval du ou des logements dérivés, le bloc chambre comportant en outre un passage d'organe de perforation configuré pour recevoir l'organe de perforation, le passage étant en communication avec les logements et s'étendant selon un axe perpendiculaire à l'axe de chaque logement, caractérisé par le fait que le couvercle est monté mobile en translation par rapport au berceau selon la direction de perforation entre une position haute dans laquelle le couvercle vient en prise avec le berceau et l'organe de perforation ne pénètre dans aucun des logements, une position intermédiaire, dans laquelle l'organe de perforation s'est déplacé dans le passage, selon une première course de perçage, et traverse le ou les logements dérivés mais ne pénètre pas dans le logement principal, et une position basse, dans laquelle l'organe de perforation s'est déplacé dans le passage, selon une seconde course de perçage, et traverse le ou les logements dérivés et le logement principal, le connecteur comportant des moyens de maintien en position du couvercle par rapport au berceau dans chacune des positions haute, intermédiaire et basse prévus en partie sur le couvercle et en partie sur le berceau.

Avantageusement, l'organe de perforation conducteur est une unique aiguille.

La présence d'une pointe au niveau de l'organe de perforation permet une liaison avec un câble dérivé même de très faible diamètre.

De préférence, l'organe de perforation est formé d'un seul tenant avec le couvercle, par injection à chaud. En variante, l'organe de perforation pourrait être serti dans le couvercle.

En variante, l'organe de perforation pourrait comprendre plusieurs aiguilles, par exemple deux ou trois aiguilles, agencées de manière à perforer chacune une même section transversale de chaque câble. Le passage d'organe de perforation pourrait ainsi être formé par un unique trou à travers lequel toutes ces aiguilles pourraient s'étendre, ou bien être formé par plusieurs trous, chacun dédié à au moins une aiguille, par exemple. L'organe de perforation pourrait également se présenter sous la forme d'une vis, auquel cas le passage d'organe de perforation serait un passage taraudé.

De préférence, le couvercle et le bloc chambre sont configurés de telle sorte que, lorsque le couvercle est en position basse, le logement principal est un logement traversant et le ou les logements dérivés sont des logements borgnes.

En raison du fait que le ou chaque câble dérivé est reçu dans un logement borgne, il n'y a aucun risque de contact électrique avec la peau de l'utilisateur.

Dans un mode de réalisation particulier, dans lequel le couvercle comporte quatre faces latérales, les axes des logements sont parallèles les uns aux autres et chaque logement a deux extrémités ouvertes définissant deux ouvertures de passage pour chaque câble, chacune des deux faces latérales du couvercle perpendiculaires aux axes des logements comporte une fente longitudinale débouchant sur le bord libre du couvercle, ces fentes longitudinales étant configurées de telle sorte que, lorsque le couvercle est en position basse, le logement principal est un logement traversant et le ou les logements dérivés sont des logements borgnes.

Par exemple, dans lequel les axes des logements sont parallèles les uns aux autres et le couvercle est un couvercle à section transversale en forme de C ayant deux faces latérales opposées parallèles aux axes des logements, le logement principal a deux ouvertures de passage de câble et le ou chaque logement dérivé a une seule ouverture de passage de câble pour chaque câble.

Avantageusement, le bloc chambre comporte une partie de séparation isolante séparant le logement principal et le ou les logements dérivés, laquelle partie de séparation est traversée par le passage d'organe de perforation.

Dans un mode de réalisation particulier, le bloc chambre comporte en outre une partie de guidage isolante disposée en amont du ou des logements dérivés et une partie terminale isolante disposée en aval du logement principal, l'amont et l'aval étant considérés selon la direction de perforation, le passage d'organe de perforation étant défini par un orifice traversant la partie de guidage, un orifice traversant la partie de séparation et un orifice débouchant dans la partie terminale, lesquels orifices sont disposés en regard les uns des autres.

Dans un mode de réalisation particulier, le berceau est un berceau de forme mâle et le couvercle est un couvercle de forme femelle apte à coiffer le berceau, le couvercle ayant une base à partir de laquelle s'étend l'organe de perforation et au moins deux faces latérales opposées s'étendant côté organe de perforation, le berceau ayant un fond à partir duquel s'étend le bloc chambre et au moins deux faces latérales opposées aptes à venir en regard des au moins deux faces latérales opposées du couvercle, les moyens de maintien en position comprenant une structure d'encliquetage solidaire desdites faces latérales opposées du couvercle et configurée pour coopérer avec une structure de retenue en position intermédiaire, le cas échéant pour coopérer également avec une structure de retenue en position basse ou pour coopérer successivement avec une structure de retenue en position haute, la structure de retenue en position intermédiaire et la structure de retenue en position basse, ladite ou lesdites structures de retenue étant solidaires desdites faces latérales opposées du berceau.

Dans un mode de réalisation particulier, le fond est apte à coopérer avec les bords des faces latérales du couvercle en position basse et est prolongé par deux parties formant languette opposées formées dans le plan du fond et configurées pour faire saillie au-delà de la paroi latérale du couvercle en position basse. Ces parties formant languette permettent de faciliter la manipulation du connecteur pour l'utilisateur, notamment le mouvement de recul du couvercle par rapport au berceau.

De préférence, la structure d'encliquetage comporte deux parties d'encliquetage sous la forme de deux pattes élastiques prolongeant, du côté de l'extrémité libre, les deux faces latérales opposées du couvercle et portant des saillies recourbées l'une vers l'autre à angle droit.

De telles pattes élastiques peuvent fléchir facilement vers l'extérieur lors du déplacement en translation du couvercle, puis revenir rapidement dans leur position initiale non fléchie afin de venir en butée contre la ou les structures de retenue.

De préférence, la structure de retenue en position intermédiaire, le cas échéant respectivement la structure de retenue en position haute, comporte deux rainures ménagées sur les faces latérales opposées du berceau pour coopérer avec les deux parties d'encliquetage lorsque le couvercle est en position intermédiaire, le cas échéant respectivement en position haute, chaque rainure étant délimitée par un épaulement amont à angle droit et un épaulement aval oblique.

Chaque épaulement amont à angle droit forme ainsi une butée amont empêchant le recul du couvercle et chaque épaulement aval oblique forme ainsi une butée avale permettant de maintenir de manière sûre le couvercle en position intermédiaire et, le cas échéant, en position haute. En d'autres termes, la structure de retenue en position haute, lorsque présente, empêche tout démontage involontaire du couvercle par rapport au berceau lorsque le couvercle est en position haute tout en autorisant le passage en position intermédiaire sous l'effet d'un effort appliqué par l'utilisateur, et la structure de retenue en position intermédiaire rend le recul du couvercle de la position intermédiaire vers le haut, le cas échéant à la position haute, difficile tout en autorisant le passage en position intermédiaire sous l'effet d'un effort appliqué par l'utilisateur. Ainsi, chacune de ces structures de retenue permet d'éviter tout retrait de l'organe de perforation une fois que le ou les câbles dérivés sont perforés. Il est toutefois possible pour l'utilisateur de surmonter ces angles droits, par exemple pour revenir en position haute, en insérant une pointe d'outil, tel qu'un tournevis.

De préférence, la structure de retenue en position basse comporte deux rainures agencées sur les faces latérales opposées du berceau pour coopérer avec les deux parties d'encliquetage lorsque le couvercle est en position basse, chaque rainure étant délimitée par un épaulement amont oblique et un épaulement aval à angle droit.

Une telle face oblique, notamment à 45 degrés, permet de maintenir le couvercle en position basse tout en autorisant une course de recul du couvercle, inverse à la seconde course de perçage, par un léger effort de la part de l'utilisateur. Cette structure de retenue en position basse permet donc à l'utilisateur de déconnecter le câble principal vis-à-vis du connecteur. La présence de l'épaulement à angle droit permet de limiter la seconde course de perçage, évitant ainsi que l'organe de perforation ne fasse saillie hors du berceau.

Bien entendu, la personne du métier pourra aisément mettre en oeuvre lesdits moyens de maintien en position du couvercle sous d'autres formes que celles décrites ci-dessus.

Par exemple, le berceau peut présenter en partie haute au moins une saillie et le couvercle peut présenter, au moins à une hauteur correspondant à la position intermédiaire, avantageusement à trois hauteurs différentes le long de celui-ci, correspondant chacune à l'une respective des positions haute, intermédiaire et basse, au moins une encoche complémentaire de la ou des saillies, de telle sorte qu'au moins à la position intermédiaire, avantageusement à chacune desdites trois positions, la ou les saillies sont engagées dans la ou les encoches respectives. La ou les saillies et encoches présenteront avantageusement des flancs inclinés, pour faciliter l'engagement de la ou saillies dans les encoches et leur désengagement. En variante, la ou les saillies pourront être portées par le couvercle, en partie basse de celui-ci, et les encoches seront alors portées par le berceau, le cas échéant à trois hauteurs différentes.

On pourrait tout aussi bien prévoir, au moins à la position intermédiaire, avantageusement à chacune desdites positions, des moyens de maintien en position du type à baïonnette, par aimantation, par filetage intermédiaire, etc., dans le cas d'un connecteur cylindrique, ou bien, par exemple, des moyens de maintien en position par goupille latérale dans le cas d'un connecteur rectangulaire.

La présente invention n'est donc pas limitée à la manière dont les moyens de maintien en position sont mis en oeuvre, laquelle mise en oeuvre est à la portée de la personne du métier.

Avantageusement, une face latérale du bloc chambre parallèle à l'axe du logement principal comporte une fente d'insertion qui communique avec le logement principal.

Cette fente d'insertion permet à l'utilisateur d'insérer latéralement le câble principal dans le logement principal, et donc une insertion aisée.

Selon un mode de réalisation préféré, le berceau comprend un second logement principal, de dimension différente celle du premier logement principal, en amont de ce dernier et en aval du ou des logements dérivés, le second logement principal, creux, étant conformé pour la réception d'une partie d'un câble principal et s'étendant suivant un axe parallèle à l'axe du premier logement principal, le passage d'organe de perforation étant en communication également avec le second logement principal, l'organe de perforation, dans la position intermédiaire, traversant le ou les logements dérivés mais ne pénétrant pas les logements principaux, et, dans la position basse, traversant le ou les logements dérivés et les logements principaux, le berceau comportant en outre une seconde fente d'insertion, qui communique avec le second logement principal, et un élément de serrage relié à pivotement au berceau, en partie basse de ce dernier et sur le côté où se situe la face latérale dans laquelle sont ménagées les fentes d'insertion, de façon à être apte à pivoter entre une position ouverte, dans laquelle l'élément de serrage a pivoté vers le bas et dégage l'accès aux logements principaux par l'intermédiaire des fentes d'insertion, pour permettre l'insertion d'un câble principal dans au moins l'un des logements principaux, et une position fermée dans laquelle l'élément de serrage a pivoté vers le haut de façon à venir se placer dans le prolongement de ladite face latérale du berceau, pour permettre au couvercle, en position basse, de coiffer le berceau et ainsi maintenir l'élément de serrage en position fermée, et à appuyer le ou chaque câble principal contre le fond du logement principal respectif.

Avec la configuration ci-dessus, le connecteur présente l'avantage d'une polyvalence d'utilisation, puisqu'il est possible de placer un câble principal de plus petit diamètre dans le logement principal de plus petit diamètre et/ou un câble principal de plus grand diamètre dans le logement principal de plus grand diamètre, et l'élément de serrage permet non seulement de faciliter l'insertion du câble principal dans le logement principal correspondant, mais encore de bloquer en position centrale le câble principal dans le logement principal de façon à garantir que l'âme conductrice soit bien traversée par l'organe de perforation.

La présente invention a également pour objet un système déporté de reproduction synchrone de l'allumage d'au moins un feu d'un véhicule à deux-roues, par exemple une moto, caractérisé par le fait qu'il comprend au moins un connecteur tel que défini ci-dessus et un dispositif d'éclairage auxiliaire fixé à au moins un accessoire déporté par rapport à l'au moins un feu du véhicule, le dispositif d'éclairage auxiliaire comportant au moins un module d'éclairage auxiliaire relié électriquement, par l'intermédiaire d'un boîtier de communication, à un câble électrique qui constitue un câble dérivé, le ou chaque câble dérivé étant reçu dans un logement dérivé d'un connecteur, le ou chaque connecteur étant apte à recevoir dans un logement principal un câble électrique principal correspondant d'un circuit d'éclairage du véhicule dont l'allumage doit être reproduit et à communiquer l'information de signal issue de ce câble principal au câble dérivé.

Ainsi, le connecteur selon la présente invention peut servir de moyen de communication entre un véhicule et un accessoire déporté.

Un tel système permet à un conducteur de véhicule à deux-roues d'être mieux vu par les automobilistes, notamment pendant les changements de direction ou les freinages ou en cas de faible luminosité.

L'accessoire déporté peut être un sac à dos, une veste, des gants, un harnais ou encore un casque destiné à être porté par le conducteur du véhicule à deux-roues ou peut être n'importe quel élément porté par le véhicule à deux-roues, tel qu'une sacoche, un rétroviseur ou un dispositif rajouté quelconque. En d'autres termes, l'accessoire déporté peut être n'importe quel élément destiné à être rendu solidaire du véhicule ou de son conducteur et disposé de manière déportée par rapport à l'au moins un feu du véhicule.

Dans un mode de réalisation particulier, dans lequel le dispositif d'éclairage auxiliaire comprend un module d'éclairage de feu de position, un module d'éclairage de feu stop, un module d'éclairage de feu de clignotant gauche et un module d'éclairage de feu de clignotant droit, le système comprend cinq connecteurs selon la présente invention, à savoir un premier connecteur destiné à recevoir le câble d'alimentation électrique du feu de position du véhicule, un deuxième connecteur destiné à recevoir le câble d'alimentation électrique du feu stop du véhicule, un troisième connecteur destiné à recevoir le câble d'alimentation électrique du feu de clignotant gauche du véhicule, un quatrième connecteur destiné à recevoir le câble d'alimentation électrique du feu de clignotant droit du véhicule, et un cinquième connecteur destiné à recevoir le câble de masse du véhicule.

Pour mieux illustrer l'objet de la présente invention, des modes de réalisation particuliers sont décrits ci-après, avec référence aux dessins annexés. Sur ces dessins :
[Fig.1] est une vue générale en perspective du connecteur selon un premier mode de réalisation de la présente invention ;
[Fig.2] est une vue en perspective du couvercle du connecteur de la [Fig.1] ;
[Fig.3] est une vue en perspective du berceau du connecteur de la [Fig.1] ;
[Fig.4] est une vue de côté en coupe selon un plan transversal passant par l'organe de perforation conducteur du connecteur de la [Fig.1], le couvercle étant maintenu en position haute par rapport au berceau ;
[Fig.5] est une vue analogue à celle de la [Fig.4], le couvercle étant maintenu en position intermédiaire par rapport au berceau ;
[Fig.6] est une vue analogue à celle des Figures 4 et 5, le couvercle étant maintenu en position basse par rapport au berceau ;
[Fig.7] est vue en perspective du connecteur selon la présente invention en utilisation, le connecteur étant prêt à l'emploi avec le câble dérivé positionné dans le berceau et le couvercle en position intermédiaire ;
[Fig.8] est une vue analogue à celle de la [Fig.7], montrant l'étape de positionnement du câble principal dans le berceau ;
[Fig.9] est une vue analogue à celle de la [Fig.7], montrant l'étape de déplacement du couvercle en position basse ;
[Fig.10] est une vue schématique du système déporté de reproduction synchrone de l'allumage d'au moins un feu d'un véhicule à deux-roues selon la présente invention ; et
[Fig.11] est une vue schématique de côté en coupe selon un plan transversal passant par l'organe de perforation conducteur d'un second mode de réalisation du connecteur selon la présente invention, le couvercle étant maintenu en position haute ;
[Fig.12] est une vue analogue à celle de la [Fig.11], montrant l'étape de déplacement du couvercle de la position haute vers la position intermédiaire ;
[Fig.13] est une vue analogue à celle de la [Fig.11], montrant le couvercle en position intermédiaire, avec l'élément de serrage en position ouverte ;
[Fig.14] est une vue analogue à celle de la [Fig.13], avec l'élément de serrage en position fermée ; et
[Fig.15] est une vue analogue à celles des Figures 11, 12 et 13, avec le couvercle en position basse.

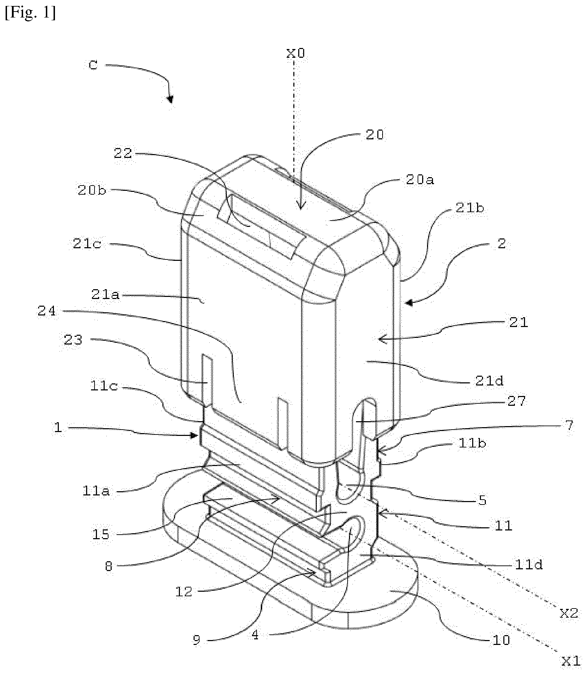

Si l'on se réfère tout d'abord aux Figures 1 à 9, on peut voir que le connecteur C selon la présente invention est un connecteur de dérivation du type à perforation d'isolant pour câbles électriques isolés destiné à raccorder électriquement un câble principal P et au moins un câble dérivé D. Dans le premier mode de réalisation représenté sur les Figures 1 à 9, le connecteur C est configuré pour raccorder électriquement deux câbles électriques, à savoir un câble principal P et un câble dérivé D. Toutefois, il convient de souligner que le connecteur C pourrait également être configuré pour raccorder électriquement un câble principal P à plusieurs câbles dérivés D.

Le connecteur C selon la présente invention est un connecteur sous la forme d'un ensemble de deux pièces 1, 2 assemblées, le connecteur C comprenant deux pièces 1, 2 mobiles en translation l'une par rapport à l'autre, à savoir un berceau 1 et un couvercle 2.

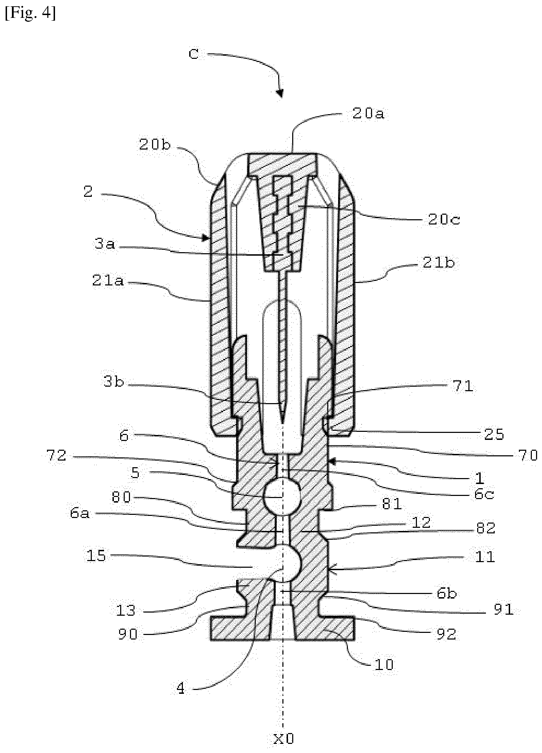

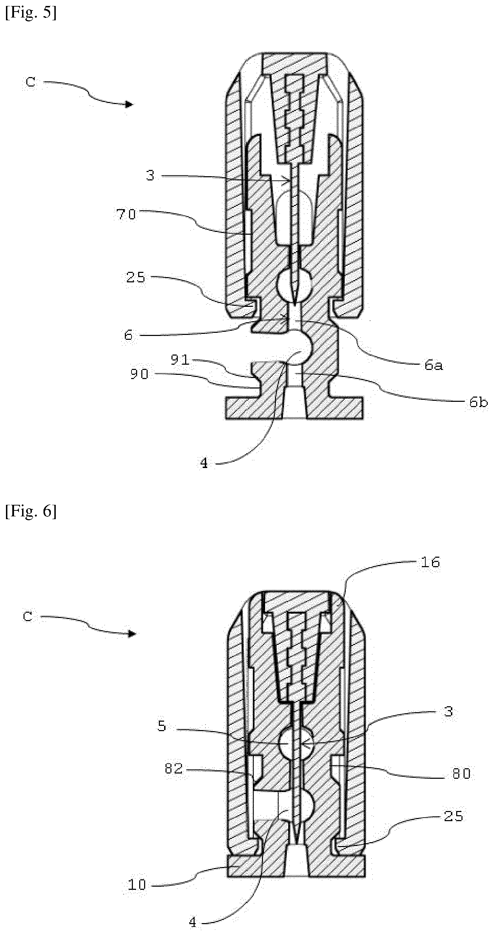

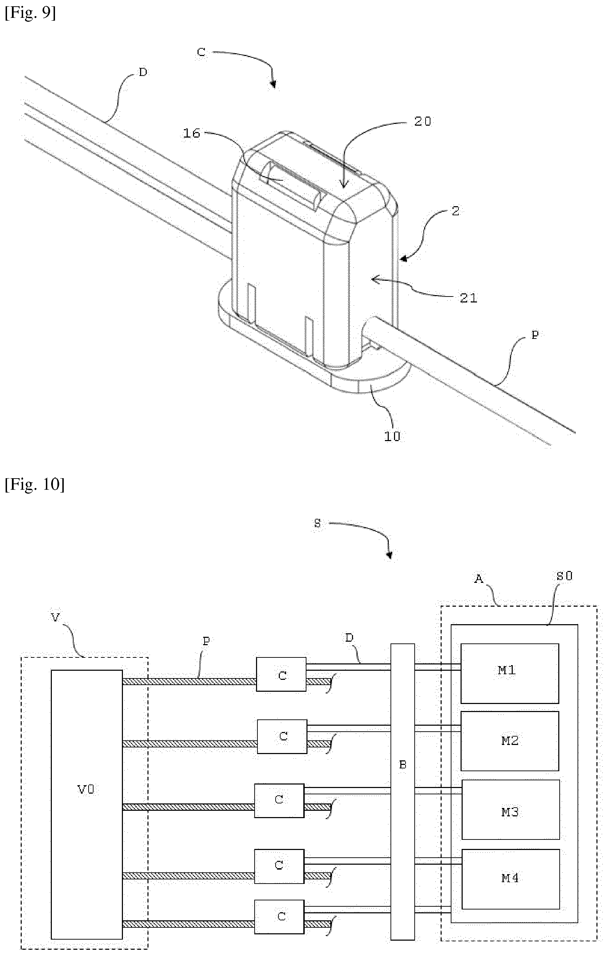

En particulier, comme on peut le voir sur les Figures 4 à 9 le couvercle 2 est mobile par rapport au berceau 1 entre trois positions, à savoir une position haute (Figures 1 et 4), une position intermédiaire (Figures 5, 7 et 8) et une position basse (Figures 6 et 9), dans lesquelles le couvercle 2 peut être maintenu par l'intermédiaire de moyens de maintien en position.

On souligne ici que l'on pourrait prévoir que le couvercle 2 puisse être maintenu en position uniquement dans la position intermédiaire, le couvercle 2 étant ainsi déplaçable au moins entre une position intermédiaire et la position basse. Par conséquent, les caractéristiques des moyens de maintien décrits ci-dessus qui sont liées au maintien du couvercle 2 dans la position haute et dans la position basse sont facultatives.

Le couvercle 2 a pour fonction de permettre la perforation des câbles électriques isolés P, D afin d'assurer la communication de l'information de signal issue du câble principal P au câble dérivé D, et à cet effet, le couvercle 2 comprend un organe de perforation conducteur 3.

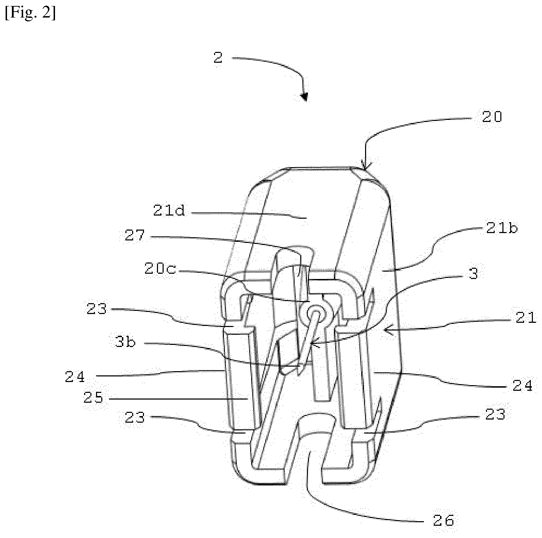

Comme on peut le voir sur les Figures 1 et 2, le couvercle 2 comporte une base 20 portant l'organe de perforation 3 et une jupe périphérique 21.

La base 20 présente une paroi centrale 20a rectangulaire prolongée par deux parois inclinées 20b qui s'étendent de part et d'autre de la paroi centrale 20a le long des côtés longs de celle-ci. Deux évidements 22 rectangulaires sont pratiqués dans la base 20, au niveau de la zone de jonction entre la paroi centrale 20a et chaque paroi inclinée 20b et de manière symétrique par rapport à un plan passant par l'axe central de la paroi centrale 20a. Une partie de montage 20c d'organe de perforation s'étend à partir de la paroi centrale 20a et fait saillie perpendiculairement à celle-ci du côté des parois inclinées 20b.

La jupe périphérique 21 présente quatre faces latérales 21a, 21b, 21c, 21d sensiblement rectangulaires, à savoir deux premières faces latérales 21a, 21b opposées s'étendant à partir des parois inclinées 20b et deux secondes faces latérales 21c, 21d opposées s'étendant à partir des côtés courts de la paroi centrale 20a. Les quatre faces latérales 21a, 21b, 21c, 21d sont agencées perpendiculairement à la paroi centrale 20a et sont dimensionnées de manière à entourer l'organe de perforation 3.

Chacune des deux premières faces latérales 21a, 21b est fendue au niveau de son bord libre. En particulier, chaque première face latérale 21a, 21b comporte deux fentes 23 qui délimitent entre celles-ci une patte 24 de forme rectangulaire et de longueur sensiblement égale à la longueur de l'évidement 22 avec lequel la patte 24 est alignée. Chaque patte 24 porte une saillie 25 repliée vers l'intérieur de la jupe périphérique 21 à angle droit. La saillie 25 s'étend sur toute la longueur du bord libre de la patte 24. Ainsi, les deux saillies 25 sont recourbées l'une vers l'autre et sont disposées en regard l'une de l'autre. Chaque patte 24 est apte à se déformer élastiquement et à fléchir par rapport à la face latérale 21a, 21b qui la porte, et donc à déplacer la saillie 25 entre une position non déformée, dans laquelle la saillie 25 s'étend vers l'intérieur du couvercle 2, et une position déformée, dans laquelle la saillie 25 ne s'étend pas vers l'intérieur du couvercle 2. Ainsi, chaque patte 24 et sa saillie 25 constituent une partie d'encliquetage. Les deux parties d'encliquetage forment une structure d'encliquetage 24, 25 du couvercle 2.

Chacune des deux secondes faces latérales 21c, 21d comporte une fente longitudinale 26, 27 débouchant sur le bord libre du couvercle 2. En particulier, l'une des secondes faces latérales 21c comporte une grande fente longitudinale 26 et l'autre seconde face latérale 21d comporte une petite fente longitudinale 27 positionnée en regard de la région d'extrémité côté bord libre de la grande fente longitudinale 26.

La base 20 et la jupe périphérique 21 sont réalisées en un matériau isolant électriquement, notamment en matière plastique.

Dans le premier mode de réalisation, l'organe de perforation conducteur 3 est une unique aiguille. Cette aiguille 3 comporte une zone de montage 3a à une extrémité et une pointe effilée 3b à son extrémité opposée. La pointe 3b est réalisée en un matériau conducteur électrique, notamment en métal. La pointe 3b est une pointe droite s'étendant selon un axe X0 qui définit une direction de perforation. La zone de montage 3a est solidaire de la partie de montage 20c. Dans le cas où l'aiguille 3 est rendue solidaire de la base 20 par injection à chaud, la zone de montage 3a peut se présenter sous la forme de manchons cylindriques en matière plastique. Dans le cas où l'aiguille 3 est rendue solidaire de la base 20 par sertissage, la zone de montage 3a peut se présenter sous la forme de quatre ailettes séparées les unes des autres par des zones fendues.

En variante, on pourrait avoir un couvercle 2 ne comportant que deux faces latérales opposées à la place de la jupe périphérique à quatre faces latérales, lesquelles faces latérales opposées porteraient la structure d'encliquetage. On pourrait également avoir un organe de perforation 3 comprenant plusieurs aiguilles métalliques au tout autre élément perforant conducteur.

Le berceau 1 a pour fonction de recevoir les câbles à raccorder électriquement et de les positionner de telle sorte que l'organe de perforation 3 est en mesure de les traverser.

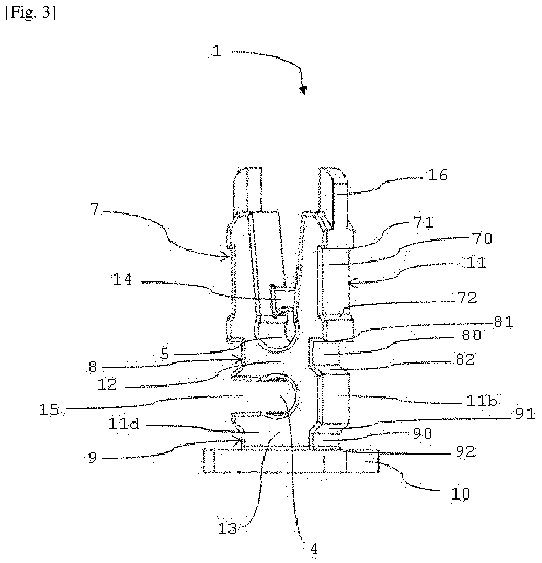

Comme on peut le voir sur la [Fig.3], le berceau 1 comporte un fond 10 et un bloc chambre 11 s'étendant à partie du fond 10 et formé d'un seul tenant avec celui-ci.

Le berceau 1 est réalisé en un matériau isolant électriquement, notamment en matière plastique.

Le fond 10 se présente sous la forme d'une plaque oblongue, s'étendant parallèlement au plan de la base 20 à l'état assemblé du connecteur C, et qui est dimensionnée de telle sorte que, lorsque le bord libre du couvercle 2 vient en contact avec le fond 10, deux régions d'extrémité opposées de la plaque font saillie de part et d'autre du couvercle 2, en particulier, au-delà des secondes faces latérales 21c, 21d du couvercle 2. Ces régions d'extrémité en saillie forment ainsi des languettes permettant de faciliter la manipulation du connecteur C et notamment le déplacement en translation du couvercle 2 à l'opposé du fond 10.

Le bloc chambre 11 présente deux premières faces latérales 11a, 11b opposées destinées à venir en regard des deux premières faces latérales 21a, 21b du couvercle 2, et deux secondes faces latérales 11c, 11d opposées destinées à venir en regard des deux secondes faces latérales 21c, 21d du couvercle 2.

Pour la réception des câbles P, D, le bloc chambre 11 comprend un logement principal 4 destiné à recevoir un câble principal P et un logement dérivé 5 destiné à recevoir un câble dérivé D. Si l'on considère la direction de perforation, le logement dérivé 5 se trouve en amont du logement principal 4. Autrement dit, le logement principal 4 est disposé entre le logement dérivé 5 et le fond 10 du berceau 1. Chaque logement 4, 5 présente une forme générale cylindrique ou semi-cylindrique et est conformé pour recevoir un câble P, D avec un faible jeu entre le câble P, D et le logement 4, 5. L'axe X1 du logement principal 4 est parallèle à l'axe X2 du logement dérivé 5 et les axes X1, X2 des logements 4, 5 sont situés dans un même plan perpendiculaire au plan de la paroi centrale 20a du couvercle 2. Ainsi, les axes X1, X2 des logements 4, 5 sont perpendiculaires à l'axe X0 de l'organe de perforation 3 et perpendiculaires aux plans des secondes faces latérales 11c, 11d du bloc chambre 11. Chaque logement 4, 5 a deux extrémités ouvertes définissant deux ouvertures de passage pour le câble à installer. Le logement principal 4 et le logement dérivé 5 sont séparés l'un de l'autre par une partie de séparation 12 isolante. Ainsi, l'utilisateur du connecteur C ne risque pas de toucher le câble dérivé D lorsqu'il installe le câble principal P.

Le logement principal 4 et le logement dérivé 5 communiquent l'un avec l'autre par l'intermédiaire d'un passage 6 d'organe de perforation. Ce passage 6 s'étend perpendiculairement aux axes X1, X2 des logements 4, 5 et est configuré pour recevoir l'organe de perforation 3 porté par le couvercle 2 et permettre son déplacement en translation à l'intérieur du passage 6. Ce passage 6 comprend donc un orifice central 6a ménagé dans la partie de séparation 12 et débouchant dans le logement principal 4 et dans le logement dérivé 5. Ce passage 6 est prolongé en aval du logement principal 4 par un orifice aval 6b débouchant dans le logement principal 4 et se terminant dans une partie isolante 13 située entre le logement principal 4 et le fond 10. L'orifice central 6a et l'orifice aval 6b sont coaxiaux. Ce passage 6 est également prolongé en amont du logement dérivé 5 par un orifice amont 6c débouchant dans le logement dérivé 5 et traversant une partie de guidage 14 isolante définissant une section de paroi du logement dérivé 5.

Afin de faciliter l'insertion du câble principal P dans le logement principal 4, le bloc chambre 11 comporte une fente d'insertion 15 formée dans l'une de ses premières faces latérales 11a ou 11b et qui communique avec le logement principal 4. La fente d'insertion 15 s'étend sur toute la longueur du logement principal 4. Ainsi, le câble principal P peut être inséré latéralement, autrement dit selon une direction transversale à l'axe X1 du logement principal 4, par passage à travers la fente d'insertion 15.

Au niveau de sa partie comprenant le logement principal 4, la fente d'insertion 15 et la partie de séparation 12 isolante, le bloc chambre 11 présente une forme de C en coupe transversale. Au niveau de sa partie comprenant le logement dérivé 5 et la partie de guidage 14, le bloc chambre 11 présente une forme de U en coupe transversale. En effet, la partie du bloc chambre 11 située en amont du logement dérivé 5 comporte deux cornes de guidage 16 permettant d'assurer le guidage du couvercle 2 par rapport au berceau 1. Ces cornes 16 sont configurées pour être reçues dans les évidements 22 du couvercle 2 lorsque le bord libre du couvercle 2 vient en contact avec le fond 10 du berceau 1.

Pour le maintien en position du couvercle 2 par rapport au berceau 1 dans chacune des trois positions, le bloc chambre 11 comprend une structure de retenue en position haute 7, une structure de retenue en position intermédiaire 8 et une structure de retenue en position basse 9 aptes à coopérer avec la structure d'encliquetage 24, 25 du couvercle 2. Ainsi, la structure d'encliquetage 24, 25 du couvercle 2 et les structures de retenue 7, 8, 9 du berceau 1 forment les moyens de maintien en position.

On souligne de nouveau que les structures de retenue en position haute 7 et basse 9 sont facultatives, puisque selon la présente invention on pourrait prévoir un maintien du couvercle 2 uniquement dans la position intermédiaire.

La structure de retenue en position haute 7 permet d'assurer que le couvercle 2 reste assemblé au berceau 1 tout en empêchant un perçage non souhaité des câbles P, D.

La structure de retenue en position haute 7 comporte deux rainures 70 pratiquées dans les deux premières faces latérales 11a, 11b opposées du bloc chambre 11. Chaque rainure 70 s'étend d'un bord à l'autre de la première face latérale 11a, 11b, entre la corne de guidage 16 et une zone située en amont du logement dérivé 5. Chaque rainure 70 est délimitée par un épaulement amont 71 à angle droit et un épaulement aval 72 oblique. L'épaulement amont 71 à angle droit s'étend dans la région d'extrémité libre du bloc chambre 11, au voisinage de la corne de guidage 16. Cet épaulement amont 71 forme donc une butée haute apte à coopérer avec la saillie 25 correspondante du couvercle 2 afin d'empêcher le retrait du couvercle 2 vis-à-vis du berceau 1. L'épaulement aval 72 oblique forme un angle d'environ 135 degrés avec la première face latérale 11a ou 11b à partir de laquelle s'étend l'épaulement aval 72. Ainsi, l'épaulement aval 72 est incliné de manière à bloquer la saillie 25 correspondante du couvercle 2 vis-à-vis d'un déplacement involontaire dans la direction de perforation, mais à permettre un tel déplacement lorsqu'un effort est appliqué par un utilisateur.

La structure de retenue en position intermédiaire 8 permet de maintenir l'organe de perforation 3 à travers le câble dérivé D, autrement dit d'empêcher le couvercle 2 de reculer vers la position haute une fois que le câble dérivé D est perforé et d'empêcher le couvercle 2 d'avancer involontairement vers la position basse et de perforer le câble principal P en l'absence d'effort appliqué par l'utilisateur.

La structure de retenue en position intermédiaire 8 comporte également deux rainures 80 pratiquées dans les deux premières faces latérales 11a, 11b opposées du bloc chambre 11. Chaque rainure 80 s'étend d'un bord à l'autre de la première face latérale 11a, 11b, entre la rainure 70 de la structure de retenue en position haute 7 et la fente d'insertion 15. Chaque rainure 80 est délimitée par un épaulement amont 81 à angle droit et un épaulement aval 82 oblique. L'épaulement amont 81 à angle droit s'étend au niveau de l'entrée de l'orifice central 6a du passage 6. Cet épaulement amont 81 forme donc une butée haute apte à coopérer avec la saillie 25 correspondante du couvercle 2 afin d'empêcher le recul du couvercle 2. L'épaulement aval 82 oblique forme un angle d'environ 135 degrés avec la première face latérale 11a ou 11b à partir de laquelle s'étend l'épaulement aval 82. Ainsi, l'épaulement aval 82 est incliné de manière à bloquer la saillie 25 correspondante du couvercle 2 vis-à-vis d'un déplacement involontaire dans la direction de perforation, mais à permettre un tel déplacement lorsqu'un effort est appliqué par un utilisateur.

Il convient de souligner que l'angle formé par chaque épaulement aval 72, 82 avec la face à partir de laquelle celui-ci s'étend n'est pas limité à un angle d'environ 135 degrés, et que tout angle permettant à l'épaulement aval 72, 82 d'empêcher le couvercle 2 de se déplacer dans la direction de perforation en l'absence d'un effort appliqué volontairement par l'utilisateur sur le couvercle 2 et autorisant un tel déplacement lors de l'application volontaire d'un effort, pourrait être choisi.

La structure de retenue en position basse 9 permet de maintenir l'organe de perforation 3 à la fois à travers le câble dérivé D et à travers le câble principal P, assurant ainsi la communication de l'information de signal du câble principal P au câble dérivé D, autrement dit, elle permet d'empêcher le couvercle 2 de reculer involontairement vers la position intermédiaire une fois que le câble principal P est perforé et d'empêcher le couvercle 2 d'avancer davantage au-delà du logement principal 4 et notamment de faire saillie au-delà du fond 10.

La structure de retenue en position basse 9 comporte également deux rainures 90 pratiquées dans les deux premières faces latérales 11a, 11b opposées du bloc chambre 11. Chaque rainure 90 s'étend d'un bord à l'autre de la première face latérale 11a, 11b, entre la fente d'insertion 15 et le fond 10. Chaque rainure 90 est délimitée par un épaulement amont 91 oblique et un épaulement aval 92 à angle droit. L'épaulement amont 91 oblique forme un angle d'environ 45 degrés avec la première face latérale 11a ou 11b à partir de laquelle s'étend l'épaulement amont 91. Ainsi, l'épaulement amont 91 est incliné de manière à bloquer la saillie 25 correspondante du couvercle 2 vis-à-vis d'un déplacement involontaire dans la direction inverse à la direction de perforation, mais à permettre un tel déplacement lorsqu'un effort est appliqué par un utilisateur. L'épaulement aval 92 à angle droit correspond à la face du fond 10 à partir de laquelle s'étend le bloc chambre 11.

En variante, le bloc chambre 11 pourrait comporter un logement principal 4 et plusieurs logements dérivés 5. Dans ce cas, les logements dérivés sont positionnés parallèlement entre eux et les uns à la suite des autres dans un même plan en amont du logement principal. On pourrait également avoir un logement dérivé 5 conformé pour recevoir plusieurs câbles dérivés D les uns au-dessus des autres, lesquels câbles dérivés D seraient alors en contact entre eux. On peut également envisager un mode de réalisation dans lequel les axes du logement principal 4 et du ou des logements dérivés 5 ne seraient pas parallèles entre eux. En effet, il suffirait que les axes des logements 4, 5 soient tous perpendiculaires à l'axe X0 de l'organe de perforation 3 et croisent tous l'axe du passage 6 d'organe de perforation.

Le berceau 1 pourrait également comporter une fente d'insertion communiquant latéralement avec le logement dérivé 5, en particulier, une fente d'insertion formée dans la face du bloc chambre 11 qui est opposée à la face comportant la fente d'insertion 15 débouchant dans le logement principal 4, et débouchant dans le logement dérivé 5. Une telle fente d'insertion supplémentaire s'avère utile si le connecteur C est fourni à l'utilisateur sans que le ou les câbles dérivés D ne soient installés dans le connecteur C au préalable.

Comme on peut le voir sur les Figures 1 et 4 à 9, à l'état assemblé du connecteur C, le berceau 1 constitue une pièce mâle et le couvercle 2 constitue une pièce femelle, le bloc chambre 11 étant configuré pour être reçu dans le couvercle 2.

En variante au mode de réalisation préféré, dans lequel le berceau 1 est une pièce mâle et le couvercle 2 est une pièce femelle, on pourrait avoir un couvercle mâle sous la forme d'un bouchon et un berceau femelle sous la forme d'un boîtier apte à être fermé par le bouchon. Dans ce cas, la structure d'encliquetage est portée par au moins une face latérale du couvercle dirigée vers l'extérieur du couvercle, et les structures de retenue du berceau sont portées par au moins une face latérale du berceau dirigée vers l'intérieur du berceau.

Si l'on se réfère plus particulièrement à la [Fig.4], on peut voir que dans la position haute, le couvercle 2 vient en prise avec le berceau 1, mais l'organe de perforation 3 ne pénètre dans aucun logement 4, 5.

En particulier, dans la position haute, les saillies 25 de chaque partie d'encliquetage sont reçues dans les rainures 70 de la structure de retenue en position haute 7. Les ouvertures de passage de câble du logement principal 4 et du logement dérivé 5 ne sont pas fermées par le couvercle 2, de sorte que le logement principal 4 et le logement dérivé 5 sont des logements traversants.

Pour passer de la position haute à la position intermédiaire représentée sur la [Fig.5], le couvercle 2 est amené à se déplacer en translation le long du bloc chambre 11, dans la direction de perforation, selon une première course de perçage, de sorte que chaque saillie 25 se déplace de l'épaulement amont 71 à angle droit de la rainure 70 à l'épaulement aval 72 oblique de cette rainure 70 puis surmonte l'épaulement aval 72 par déformation élastique de la patte 24 de chaque partie d'encliquetage, jusqu'à ce que chaque saillie 25 soit reçue dans la rainure 80 de la structure de retenue en position intermédiaire 8. Lors de son déplacement, l'organe de perforation 3 est guidé par la partie de guidage 14, permettant d'assurer un alignement précis de l'organe de perforation 3 avec le passage 6.

Dans cette position intermédiaire, l'organe de perforation 3 traverse le logement dérivé 5 mais ne pénètre pas dans le logement principal 4, la pointe 3b étant reçue au niveau de l'entrée de l'orifice central 6a du passage 6. Par ailleurs, la petite fente longitudinale 27 coïncide avec l'une des ouvertures de passage du logement dérivé 5, de sorte que le logement dérivé 5 et le logement principal 4 sont encore des logements traversants.

Pour passer de la position intermédiaire à la position basse représentée sur la [Fig.6], le couvercle 2 est amené à se déplacer en translation le long du bloc chambre 11, dans la direction de perforation, selon une seconde course de perçage, de sorte que chaque saillie 25 se déplace de la rainure 80 de la structure de retenue en position intermédiaire 8 à la rainure 90 de la structure de retenue en position basse 9 après avoir surmonté l'épaulement aval 82 oblique par déformation élastique de la patte 24 de chaque partie d'encliquetage. Lors de son déplacement, l'organe de perforation 3 est guidé par l'orifice central 6a et l'orifice aval 6b du passage 6.

Dans cette position basse, l'organe de perforation 3 traverse à la fois le logement dérivé 5 et le logement principal 4, la pointe 3b étant reçue au niveau de la zone de jonction entre le bloc chambre 11 et le fond 10. Par ailleurs, la petite fente longitudinale 27 coïncide avec l'une des ouvertures de passage du logement principal 4, de sorte que la seconde face latérale 21d du couvercle 2 dans laquelle est ménagée la petite fente 27 ferme l'une des ouvertures de passage du logement dérivé 5. Ainsi, dans la position basse, le logement dérivé 5 est un logement borgne et le logement principal 4 est un logement traversant. En outre, dans cette position basse, le connecteur C est parfaitement étanche, le couvercle 2 coiffant complètement le bloc chambre 11 et le bord libre du couvercle 2 venant en contact avec le fond 10 du berceau 1. Une telle étanchéité est nécessaire, en utilisation, afin d'éviter le passage de l'humidité et de la poussière qui pourraient nuire au bon fonctionnement du connecteur C.

Ainsi, le passage d'une position à une autre, et donc la mise en oeuvre de la perforation par l'organe de perforation 3 est simple et rapide. Grâce à cette possibilité de maintien de la position relative du couvercle 2 et du berceau 1 dans chacune des trois positions définies ci-dessus, le connecteur C selon ce mode de réalisation de la présente invention est fiable.

Le connecteur C selon la présente invention présente en outre l'avantage d'être compact. A titre d'exemple, les dimensions du connecteur C à l'état connecté des câbles P, D, autrement dit lorsque le couvercle 2 est en position basse, pourraient être de 1,78 cm de long, 0,76 cm de large et 1,6 cm de hauteur. Par ailleurs, les logements 4, 5 sont dimensionnés en fonction du diamètre des câbles P, D destinés à être reçus dans ces logements 4, 5, de sorte que le connecteur C peut être utilisé aussi bien avec des câbles P, D de faible diamètre qu'avec des câbles de gros diamètre.

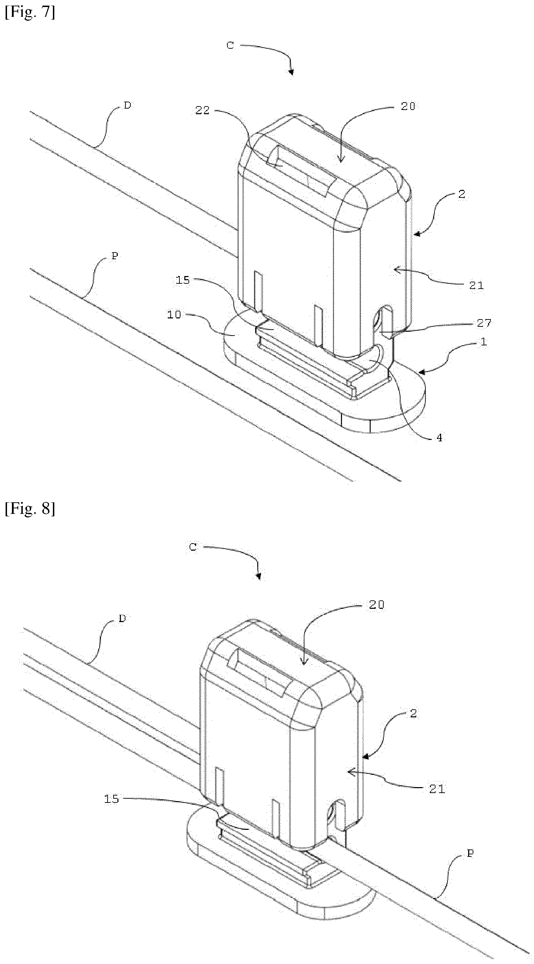

Si l'on se réfère désormais aux Figures 7 à 9, on peut voir que le procédé d'utilisation du connecteur C est aisé et rapide à mettre en oeuvre.

De préférence, le connecteur C sera livré à l'utilisateur dans un état prêt à l'emploi, comme représenté sur la [Fig.7], c'est-à-dire avec le câble dérivé D déjà installé dans le logement dérivé 5 et le couvercle 2 placé à la position intermédiaire, et donc avec le câble dérivé D traversé par l'organe de perforation 3.

Le connecteur C pourrait également être livré simplement à l'état assemblé, avec le couvercle 2 placé à la position haute et sans câble préinstallé. Dans ce cas, il convient simplement à l'utilisateur de positionner le câble dérivé D dans le logement dérivé 5, de telle sorte qu'une extrémité du câble dérivé D soit au niveau de l'ouverture du logement dérivé 5 destinée à venir en regard de la face latérale 21d du couvercle 2 comportant la petite fente longitudinale 27. Puis, l'utilisateur n'a qu'un simple effort à appliquer sur le couvercle 2 et le berceau 1 pour déplacer le couvercle 2 en translation dans la direction de perforation sur la première course de perçage, jusqu'à ce que le couvercle 2 soit maintenu à la position intermédiaire.

Le procédé d'utilisation du connecteur C comprend ensuite une étape de positionnement du câble principal P dans le logement principal 4, comme représenté sur la [Fig.8]. Lors de cette étape, le câble principal P est inséré latéralement à travers la fente d'insertion 15 jusqu'à ce qu'il soit reçu dans son logement 4, dans lequel il est maintenu en position par serrage en raison d'un faible jeu entre le câble P et son logement 4.

Enfin, le procédé d'utilisation du connecteur C comprend une étape de mise en liaison électrique entre les deux câbles P et D, comme représenté sur la [Fig.9]. Lors de cette étape, l'utilisateur appuie sur le couvercle 2 et sur le berceau 1 afin de déplacer le couvercle 2 dans la position basse. Dans cette position finale d'utilisation, les deux câbles P, D sont traversés par l'organe de perforation 3 et l'information de signal du câble principal P peut être communiquée au câble dérivé D par l'intermédiaire de l'organe de perforation conducteur 3.

Grâce à un tel procédé d'utilisation simple et rapide à mettre en oeuvre, un utilisateur n'ayant pas de compétences particulières en électricité peut installer lui-même le connecteur C dans un système S le comprenant, notamment dans le système S représenté schématiquement sur la [Fig.10].

Ce système S est un système déporté de reproduction synchrone de l'allumage d'au moins un feu d'un véhicule V à deux-roues, par exemple une moto. Un tel système S vise à permettre à un conducteur de véhicule V à deux-roues, notamment un motocycliste, d'être mieux vu par les automobilistes, notamment lors des changements de directions et des freinages.

Le système S déporté selon la présente invention comprend un dispositif d'éclairage auxiliaire S0 fixé à au moins un accessoire déporté A et au moins un connecteur C tel que défini ci-dessus assurant la communication entre un circuit d'éclairage V0 du véhicule V à deux-roues et le dispositif d'éclairage auxiliaire S0.

Le dispositif d'éclairage auxiliaire S0 comprend au moins un module d'éclairage auxiliaire M1 à Mn relié électriquement à un câble électrique dit câble dérivé D par l'intermédiaire d'un boîtier de communication B.

Dans le mode de réalisation représenté sur la [Fig.10], le dispositif d'éclairage auxiliaire S0 comprend quatre modules d'éclairage auxiliaire M1 à M4, à savoir un module d'éclairage de feu de position M1, un module d'éclairage de feu stop M2, un module d'éclairage de feu de clignotant gauche M3 et un module d'éclairage de feu de clignotant droit M4. Chaque module d'éclairage auxiliaire M1 à Mn est connecté à un câble électrique dit câble dérivé D par l'intermédiaire du boîtier de communication B. Le boîtier de communication B peut être relié de manière filaire ou de manière sans fil aux modules d'éclairage auxiliaires M1 à Mn. Ainsi, le dispositif d'éclairage auxiliaire S0 est raccordé à quatre câbles dérivés D pour la récupération du signal du feu correspondant. Afin de permettre la connexion de chacun de ces quatre câbles dérivés D avec un câble principal P correspondant du véhicule V, le système S comprend quatre connecteurs C selon le mode de réalisation préféré, c'est-à-dire quatre connecteurs C comportant chacun un logement principal 4 destiné à recevoir une partie d'un câble principal P du véhicule V et un logement dérivé 5 recevant une partie d'un câble dérivé D. Plus précisément, le système S comprend un premier connecteur C destiné à recevoir, dans son logement principal 4, le câble d'alimentation électrique du feu de position du véhicule V et recevant, dans son logement dérivé 5, le câble dérivé D relié au module d'éclairage de feu de position M1, un deuxième connecteur C destiné à recevoir, dans son logement principal 4, le câble d'alimentation électrique du feu stop du véhicule V et recevant, dans son logement dérivé 5, le câble dérivé D relié au module d'éclairage de feu stop M2, un troisième connecteur C destiné à recevoir, dans son logement principal 4, le câble d'alimentation électrique du feu de clignotant gauche du véhicule V et recevant, dans son logement dérivé 5, le câble dérivé D relié au module d'éclairage de feu de clignotant gauche M3, et un quatrième connecteur C destiné à recevoir, dans son logement principal 4, le câble d'alimentation électrique du feu de clignotant droit du véhicule V et recevant, dans son logement dérivé 5, le câble dérivé D relié au module d'éclairage de de clignotant droit M4. Le système S comprend en outre un cinquième connecteur C destiné à recevoir le câble de masse du véhicule V afin de récupérer le signal de masse.

Un émetteur, installé par exemple sous la selle, récupère les informations provenant des fils, cinq dans le présent mode de réalisation. Ces fils renvoient chacun une information de tension, cette tension pouvant varier généralement entre 0V et 14V dans le cadre d'utilisation du dispositif. Ces informations sont converties en signaux binaires pour comprendre si tel feu est enclenché ou non. Par exemple, un signal 5V pourra être interprété comme un signal binaire 0 car situé au-dessous d'un seuil minimal pour être considéré comme enclenché. A fortiori, un signal de 13V sera interprété comme un signal binaire à l'état 1 car il sera considéré comme enclenché étant donné qu'il dépassera un seuil de tension donné. Dans le cadre d'utilisation et dans un cadre parfait, l'état 0 correspondrait à 0V et l'état 1 correspondrait à 12V. Pour capter correctement les signaux, l'émetteur applique des seuils pour être sûr de ne retenir que les bonnes informations. Par exemple, un seuil minimal de 11V permet de retenir tous les signaux au-delà comme étant des ordres d'allumage des feux. A contrario, un seuil maximal de 5V permet par exemple de convertir tous les signaux de moins de 5V en un état binaire nul pour signifier qu'il n'y a pas d'ordre d'allumage mais seulement d'extinction d'un ou des feux.

Aucun autre traitement n'est ici réalisé sur les signaux récupérés. Une fois les signaux binaires lus, ces derniers sont directement et purement retransmis au récepteur au sein d'un octet les contenant.

L'émetteur possède également des protections électroniques lui empêchant :
- d'être lui-même détérioré ou détruit pas des tensions trop élevées,
- d'avoir un impact sur le dispositif sur lequel les signaux sont récupérés, et
- de mal interpréter les signaux récupérés.

Pour la fixation de chaque module d'éclairage auxiliaire M1 à Mn à un accessoire déporté A, le système S comprend des moyens de fixation amovibles (non représentés), tels que des aimants, des moyens d'encliquetage, des organes de vissage, etc. L'ensemble des modules d'éclairage auxiliaire M1 à Mn peuvent être fixés de manière séparable à un même accessoire déporté A ou être apposés sur plusieurs accessoires déportés A. L'accessoire déporté A peut être un casque, un sac à dos ou une veste du conducteur ou tout autre article destiné à être rendu solidaire du véhicule V à deux-roues ou de son conducteur et disposé à une hauteur suffisante pour être visible de tous les usagers de la route, notamment une hauteur supérieure à un mètre par rapport à la route.

En fonctionnement, une fois que chaque connecteur C reçoit les câbles d'alimentation électriques P des différents feux du véhicule V, lorsque le conducteur commande l'allumage d'un ou plusieurs des feux du véhicule V, le feu stop, le clignotant gauche, le clignotant droit et/ou le feu de position du système déporté S fonctionnent en même temps que le ou les feux correspondants situés sur le véhicule V. Un automobiliste ou un autre usager de la route qui n'aurait pas vu un feu s'allumer sur le véhicule V pourrait donc voir ce même feu s'allumer sur le dispositif d'éclairage auxiliaire S0, permettant ainsi au conducteur du véhicule V à deux-roues de circuler en toute sécurité. Ainsi, en fonction de l'emplacement de l'accessoire déporté A sur lequel est fixé le dispositif d'éclairage auxiliaire S0, ce système S déporté permet une meilleure visibilité du véhicule V à deux-roues et de son conducteur depuis l'arrière du véhicule V et/ou les côtés de celui-ci, la zone de visibilité étant agrandie.

Comme indiqué ci-dessus, la présente invention n'est pas limitée à une manière spécifique de mise en oeuvre des moyens de maintien en position du couvercle par rapport au berceau.

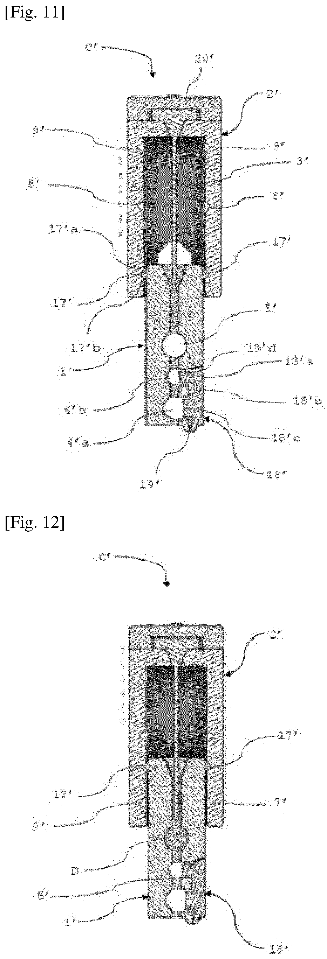

Si l'on se réfère maintenant aux Figures 11 à 15, on peut voir que l'on y a représenté un connecteur C' selon un second mode de réalisation de la présente invention, dans lequel lesdits moyens de maintien en position comprennent, d'une part, deux saillies 17' portées chacune par le berceau 1' sur une des faces latérales de ce dernier, et, d'autre part, trois paires d'encoches 7', 8', 9', ménagées dans les faces intérieures des deux faces latérales du couvercle 2'. Chaque paire d'encoches 7', 8', 9' est positionnée à une hauteur qui correspondra à l'une respective des positions haute, intermédiaire et basse du couvercle 2'. Ainsi, une première paire d'encoches 7' se trouve en partie basse des faces latérales du couvercle 2', une deuxième paire d'encoches 8' se trouve à mi-hauteur du couvercle 2' et la troisième paire d'encoches 9' se situe à proximité de la base 20' du couvercle 2'. Chaque encoche 7', 8', 9' est de forme complémentaire de la saillie 17' respective, de façon à permettre l'engagement et le désengagement des saillies 17' et des encoches 7', 8', 9'.

Là encore, on souligne que les première et troisième paires d'encoches 7', 9' sont facultatives, puisque les maintiens en position haute et en position basse sont eux-mêmes facultatifs.

Les saillies 17' seront réalisées en une matière suffisamment dure, comme par exemple en matière plastique, pour éviter un désengagement involontaire vis-à-vis des encoches 7', 8', 9', et ainsi assurer un bon maintien en position du couvercle 2'.

Chaque saillie 17' a ici une section verticale qui est triangulaire, et présente donc deux flancs inclinés, l'un, 17'a, tourné vers le haut et l'autre, 17'b, tourné vers le bas, pour faciliter l'engagement et le désengagement par l'utilisateur.

Le second mode de réalisation se distingue du premier mode de réalisation en ce que le bloc chambre 11' comprend un premier logement principal 4'a destiné à recevoir un câble principal P1 d'un premier diamètre, et un second logement principal 4'b destiné à recevoir un câble principal P2 d'un second diamètre, ici inférieur au premier diamètre.

Le second logement principal 4'b est placé en amont du premier logement principal 4'a dans la direction de perforation de l'organe de perforation 3'. Le logement dérivé 5' se situe en amont des premier et second logements principaux 4'a et 4'b dans la direction de perforation.

Une fente d'insertion 15', analogue à la fente d'insertion 15, est prévue pour chacun des premier et second logements principaux 4'a et 4'b, pour permettre une insertion du câble principal P1, P2 par un premier côté du berceau 1'.

Sur ce premier côté du berceau 1', en partie basse, et sur le côté où se situent les fentes d'insertion 15', est relié à pivotement un élément de serrage 18', par exemple par charnière 19', l'élément de serrage 18' étant configuré pour pivoter entre une position ouverte, dans laquelle l'élément de serrage 18' à pivoter vers le bas et laisse libre l'accès aux fentes d'insertion 15' pour l'insertion d'un ou des câbles principaux P1, P2, et une position fermée, dans laquelle l'élément de serrage 18' bloque en position le câble principal P1 ou P2 dans son logement principal 4'a, 4'b respectif de façon à le centrer correctement et garantir que l'organe de perforation 3' puisse correctement traverser son âme conductrice.

En effet, dans le premier mode de réalisation, si le diamètre du câble principal P est trop petit par rapport au diamètre du logement principal 5, il existe un risque que le câble principal P ne soit pas centré et que l'organe de perforation 3 vienne traverser uniquement sa gaine et non son âme conductrice.

Ce risque n'est plus présent dans le second mode de réalisation, l'élément de serrage 18' étant configuré pour que, dans la position fermée, il appuie tout câble principal P1, P2 présent dans un logement principal 4'a, 4'b contre le fond dudit logement.

A cet effet, l'élément de serrage 18' se présente sous la forme d'une pièce parallélépipédique ayant une face extérieure 18'a et une face intérieure 18'b, lesquelles sont, en position fermée, tournée respectivement vers l'extérieur et les logements principaux 4'a, 4'b, et, pour chaque logement principal 4'a, 4'b, une protubérance 18'c, 18'd portée par la face intérieure 18'b et dimensionnée pour s'étendre dans la fente d'insertion 15' respective et venir en appui contre le câble principal respectif P1, P2 lorsque l'élément de serrage 18' est en position fermée.

Avantageusement, l'élément de serrage 18' sera réalisée en une matière souple de façon à légèrement se déformer élastiquement par contact contre le câble principal P1, P2 lorsque l'élément de serrage 18' est en position fermée.

L'utilisation du connecteur C' du second mode de réalisation est similaire à celle du connecteur C du premier mode de réalisation.

Comme illustré sur la [Fig.11], le couvercle 2' peut être maintenu en position haute par engagement des saillies 17' dans la première paire d'encoches 7', permettant à l'utilisateur de placer, le cas échéant, un câble dérivé D dans le logement dérivé 5'.

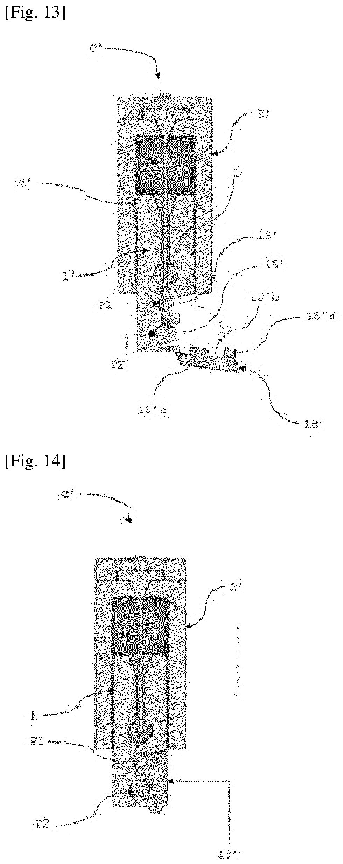

L'utilisateur peut ensuite forcer le désengagement des saillies 17' hors des encoches 7', par appui sur le couvercle 2', pour déplacer le couvercle 2' vers le bas, comme illustré sur la [Fig.12], jusqu'à engager les saillies 17' dans la deuxième paire d'encoches 8' et ainsi maintenir le couvercle 2' en position intermédiaire, comme illustré sur la [Fig.13], où l'on peut voir que l'organe de perforation 3' traverse l'âme conductrice du câble dérivé D.

L'utilisateur fait alors pivoter l'élément de serrage 18' jusqu'à la position ouverte et place, en fonction du besoin, un câble principal P1 dans le premier logement principal 4'a ou un câble principal P2 dans le second logement principal 4'b.

L'utilisateur fait ensuite pivoter l'élément de serrage 18' jusqu'à la position fermée, comme illustré sur la [Fig.14], dans laquelle la face extérieure 18'b de l'élément de serrage 18' est dans le prolongement de la face latérale respective du berceau 1' et la protubérance 18'c, 18'd vient en appui contre le câble principal P1, P2 pour le bloquer en position centrale dans le logement principal respectif 4'a, 4'b.

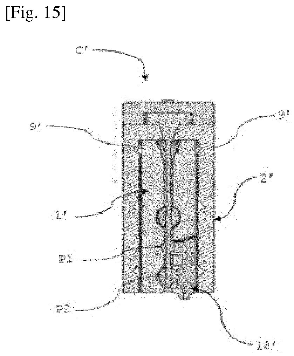

L'utilisateur peut alors de nouveau forcer le désengagement des saillies 17' hors des encoches 8' et déplacer le couvercle 2' vers le bas, jusqu'à la position basse comme illustré sur la [Fig.15], où les saillies 17' sont engagées dans la troisième paire d'encoches 9' et le couvercle 2' coiffe le berceau 1' et maintient de manière sûre l'élément de serrage 18' en position fermée.

On souligne ici que, bien que dans le système déporté S selon la présente invention, le connecteur C' soit destiné à ne recevoir qu'un seul câble principal P1 ou P2, les deux câbles principaux P1 et P2 étant représentés sur les Figures 13 à 15 uniquement pour illustrer la fonction de blocage en position assuré par l'élément de serrage 18', il est tout à fait envisageable de disposer les deux câbles principaux P1 et P2 dans les logements principaux 4'a et 4'b pour qu'ils soient tous les deux traversés par l'organe de perforation 3', et le cas échéant de prévoir plus de deux logements principaux pour recevoir, simultanément ou non, plus deux câbles principaux.

Il est bien entendu que les modes de réalisation particuliers qui viennent d'être décrits ont été donnés à titre indicatif et non limitatif, et que des modifications peuvent être apportées sans que l'on s'écarte pour autant du cadre de la présente invention.

## Revendications

1. Connecteur (C ; C') de dérivation du type à perforation d'isolant pour câbles électriques isolés configuré pour raccorder électriquement un câble principal (P ; P1, P2) et au moins un câble dérivé (D), lesquels câbles (P, D ; P1, P2, D) ont une âme conductrice, notamment une âme conductrice multibrin, entourée d'une gaine isolante, connecteur (C ; C') comprenant un berceau (1 ; 1') en matériau isolant comportant un bloc chambre (11 ; 11') destiné à recevoir une partie de chaque câble (P, D ; P1, P2, D) à raccorder, le bloc chambre (11 ; 11') comportant un logement principal (4 ; 4'a, 4'b) creux conformé pour la réception d'une partie du câble principal (P ; P1, P2) et au moins un logement dérivé (5 ; 5') creux conformé pour la réception d'une partie d'au moins un câble dérivé (D), chaque logement (4, 5 ; 4'a, 4'b, 5') s'étendant suivant un axe (X1, X2) respectif et ayant au moins une ouverture de passage de câble pour chaque câble (P, D) à raccorder, et un couvercle (2 ; 2') en matériau isolant adapté sur le berceau (1 ; 1'), le couvercle (2 ; 2') portant un organe de perforation (3 ; 3') conducteur s'étendant transversalement par rapport aux axes (X1, X2) des logements (4, 5 ; 4'a, 4'b, 5') selon une direction de perforation (X0), les logements (4, 5 ; 4'a, 4'b, 5') étant décalés selon la direction de perforation (X0) de telle sorte que le logement principal (4 ; 4'a, 4'b) se trouve en aval du ou des logements dérivés (5 ; 5'), le bloc chambre (11 ; 11') comportant en outre un passage (6 ; 6') d'organe de perforation configuré pour recevoir l'organe de perforation (3 ; 3'), le passage (6 ; 6') étant en communication avec les logements (4, 5 ; 4'a, 4'b, 5') et s'étendant selon un axe (X0) perpendiculaire à l'axe (X1, X2) de chaque logement (4, 5 ; 4'a, 4'b, 5'), **caractérisé par le fait que** le couvercle (2 ; 2') est monté mobile en translation par rapport au berceau (1 ; 1') selon la direction de perforation (X0) au moins entre une position intermédiaire, dans laquelle l'organe de perforation (3 ; 3') s'est déplacé dans le passage (6 ; 6'), selon une première course de perçage, et traverse le ou les logements dérivés (5 ; 5') mais ne pénètre pas dans le logement principal (4 ; 4'a, 4'b), et une position basse, dans laquelle l'organe de perforation (3 ; 3') s'est déplacé dans le passage (6 ; 6'), selon une seconde course de perçage, et traverse le ou les logements dérivés (5 ; 5') et le logement principal (4 ; 4'a, 4'b), le connecteur (C ; C') comportant des moyens de maintien en position du couvercle (2 ; 2') par rapport au berceau (1 ; 1') dans la position intermédiaire prévus en partie sur le couvercle (2 ; 2') et en partie sur le berceau (1 ; 1').

2. Connecteur (C ; C') selon la revendication 1, **caractérisé par le fait que** lesdits moyens de maintien sont également des moyens de maintien en position du couvercle (2 ; 2') par rapport au berceau (1 ; 1') dans la position basse.

3. Connecteur (C ; C') selon l'une quelconque des revendications 1 et 2, **caractérisé par le fait que** le couvercle (2 ; 2') est monté mobile en translation par rapport au berceau (1 ; 1') selon la direction de perforation (X0) entre une position haute dans laquelle le couvercle (2 ; 2') vient en prise avec le berceau (1 ; 1') et l'organe de perforation (3 ; 3') ne pénètre dans aucun des logements (4, 5 ; 4'a, 4'b, 5'), et lesdites positions intermédiaire et basse, lesdits moyens de maintien étant des moyens de maintien en position du couvercle (2 ; 2') par rapport au berceau (1 ; 1') dans chacune des positions haute, intermédiaire et basse.

4. Connecteur (C ; C') selon l'une quelconque des revendications 1 à 3, **caractérisé par le fait que** l'organe de perforation (3 ; 3') conducteur est une unique aiguille.

5. Connecteur (C) selon l'une quelconque des revendications 1 à 4, **caractérisé par le fait que** le couvercle (2) et le bloc chambre (11) sont configurés de telle sorte que, lorsque le couvercle (2) est en position basse, le logement principal (4) est un logement traversant et le ou les logements dérivés (5) sont des logements borgnes.

6. Connecteur (C) selon l'une quelconque des revendications 1 à 5, **caractérisé par le fait que** le bloc chambre (11) comporte une partie de séparation (12) isolante séparant le logement principal (4) et le ou les logements dérivés (5), laquelle partie de séparation (12) est traversée par le passage (6) d'organe de perforation.

7. Connecteur (C) selon l'une quelconque des revendications 1 à 6, **caractérisé par le fait que** le berceau (1) est un berceau de forme mâle et le couvercle (2) est un couvercle de forme femelle apte à coiffer le berceau (1), le couvercle (2) ayant une base (20) à partir de laquelle s'étend l'organe de perforation (3) et au moins deux faces latérales (21a, 21b) opposées s'étendant côté organe de perforation (3), le berceau (1) ayant un fond (10) à partir duquel s'étend le bloc chambre (11) et au moins deux faces latérales (11a, 11b) opposées aptes à venir en regard des au moins deux faces latérales (21a, 21b) opposées du couvercle (2), les moyens de maintien en position comprenant une structure d'encliquetage (24, 25) solidaire desdites faces latérales (21a, 21b) opposées du couvercle (2) et configurée pour coopérer avec une structure de retenue en position intermédiaire (8), le cas échéant pour coopérer également avec une structure de retenue en position basse (9) ou pour coopérer successivement avec une structure de retenue en position haute (7), la structure de retenue en position intermédiaire (8) et la structure de retenue en position basse (9), ladite ou lesdites structures de retenue (7, 8, 9) étant solidaires desdites faces latérales opposées (11a, 11b) du berceau (1).

8. Connecteur (C) selon la revendication 7, **caractérisé par le fait que** la structure d'encliquetage (24, 25) comporte deux parties d'encliquetage sous la forme de deux pattes (24) élastiques prolongeant, du côté de l'extrémité libre, les deux faces latérales opposées (21a, 21b) du couvercle (2) et portant des saillies (25) recourbées l'une vers l'autre à angle droit.

9. Connecteur (C) selon l'une quelconque des revendications 7 et 8, **caractérisé par le fait que** la structure de retenue en position intermédiaire (8), le cas échéant respectivement la structure de retenue en position haute (7), comporte deux rainures (80 ; 70) ménagées sur les faces latérales (11a, 11b) opposées du berceau (1) pour coopérer avec les deux parties d'encliquetage lorsque le couvercle (2) est en position intermédiaire, le cas échéant respectivement en position haute, chaque rainure (80 ; 70) étant délimitée par un épaulement amont à angle droit (81 ; 71) et un épaulement aval oblique (82 ; 72).

10. Connecteur (C) selon l'une quelconque des revendications 7 à 9, prise en dépendance de la revendication 2, **caractérisé par le fait que** la structure de retenue en position basse (9) comporte deux rainures (90) agencées sur les faces latérales (11a, 11b) opposées du berceau (1) pour coopérer avec les deux parties d'encliquetage lorsque le couvercle (2) est en position basse, chaque rainure (90) étant délimitée par un épaulement amont oblique (91) et un épaulement aval à angle droit (92).

11. Connecteur (C ; C') selon l'une quelconque des revendications 1 à 10, **caractérisé par le fait qu'**une face latérale (11a ou 11b) du bloc chambre (11 ; 11') parallèle à l'axe (X1) du logement principal (4 ; 4'a, 4'b) comporte une fente d'insertion (15 ; 15') qui communique avec le logement principal (4 ; 4'a, 4'b).

12. Connecteur (C'), selon la revendication 11, **caractérisé par le fait que** le berceau (1') comprend un second logement principal (4'b), de dimension différente celle du premier logement principal (4'a), en amont de ce dernier et en aval du ou des logements dérivés (5'), le second logement principal (4'b), creux, étant conformé pour la réception d'une partie d'un câble principal (P2) et s'étendant suivant un axe parallèle à l'axe du premier logement principal (4'a), le passage (6') d'organe de perforation étant en communication également avec le second logement principal (4'b), l'organe de perforation (3'), dans la position intermédiaire, traversant le ou les logements dérivés (5') mais ne pénétrant pas les logements principaux (4'a, 4'b), et, dans la position basse, traversant le ou les logements dérivés (5') et les logements principaux (4'a, 4'b), le berceau (1') comportant en outre une seconde fente d'insertion (15'), qui communique avec le second logement principal (4'b), et un élément de serrage (18') relié à pivotement au berceau (1'), en partie basse de ce dernier et sur le côté où se situe la face latérale dans laquelle sont ménagées les fentes d'insertion (15'), de façon à être apte à pivoter entre une position ouverte, dans laquelle l'élément de serrage (18') a pivoté vers le bas et dégage l'accès aux logements principaux (4'a, 4'b) par l'intermédiaire des fentes d'insertion (15'), pour permettre l'insertion d'un câble principal (P1, P2) dans au moins l'un des logements principaux (4'a, 4'b), et une position fermée dans laquelle l'élément de serrage (18') a pivoté vers le haut de façon à venir se placer dans le prolongement de ladite face latérale du berceau (1'), pour permettre au couvercle (2'), en position basse, de coiffer le berceau (1') et ainsi maintenir l'élément de serrage (18') en position fermée, et à appuyer le ou chaque câble principal (P1, P2) contre le fond du logement principal respectif (4'a, 4'b).

13. Système déporté (S) de reproduction synchrone de l'allumage d'au moins un feu d'un véhicule (V) à deux-roues, par exemple une moto, **caractérisé par le fait qu'**il comprend au moins un connecteur (C ; C') selon l'une quelconque des revendications 1 à 12 et un dispositif d'éclairage auxiliaire (S0) fixé à au moins un accessoire déporté (A) par rapport à l'au moins un feu du véhicule (V), le dispositif d'éclairage auxiliaire (S0) comportant au moins un module d'éclairage auxiliaire (M1 à Mn) relié électriquement, par l'intermédiaire d'un boîtier de communication (B), à un câble électrique qui constitue un câble dérivé (D), le ou chaque câble dérivé (D) étant reçu dans un logement dérivé (5) d'un connecteur (C ; C'), le ou chaque connecteur (C ; C') étant apte à recevoir dans un logement principal (4 ; 4'a, 4'b) un câble électrique principal (P ; P1, P2) correspondant d'un circuit d'éclairage (V0) du véhicule (V) dont l'allumage doit être reproduit et à communiquer l'information de signal issue de ce câble principal (P ; P1, P2) au câble dérivé (D).
